# EUROPÄISCHE PATENTSCHRIFT

(11) **EP 3 805 052 B1**
(45) Veröffentlichungstag und Bekanntmachung des Hinweises auf die Patenterteilung: **15.12.2021**
(21) Anmeldenummer: 20197368.2
(22) Anmeldetag: 22.09.2020
(51) Int. Cl.: B60R 21/205, B60R 21/2165

(54) **AIRBAGKLAPPENSYSTEM MIT RANDVERTIEFUNGEN UNTERSCHIEDLICHER MATERIALSTÄRKE**
AIRBAG FLAP SYSTEM WITH EDGE RECESSES OF DIFFERENT THICKNESS
SYSTÈME DE VOLET DE COUSSIN GONFLABLE POURVU DE CAVITÉS MARGINALES AYANT DIFFÉRENTES ÉPAISSEURS DE MATÉRIAU

(30) Priorität: 07.10.2019 DE 102019126901
(43) Veröffentlichungstag der Anmeldung: 14.04.2021
(73) Patentinhaber: StreetScooter GmbH, 52070 Aachen (DE)
(72) Erfinder: Schorn, Klaus, 50829 Köln (DE); Renn, Waltraud, 52428 Jülich (DE); Shallar, Dennis, 54329 Konz (DE); Radulescu, Cosmin Florian, 50859 Köln (DE)
(74) Vertreter: Michalski Hüttermann & Partner Patentanwälte mbB

(56) Entgegenhaltungen:
- EP-A2- 1 403 148
- EP-A2- 1 700 755
- CN-A- 107 804 266
- US-A1- 2005 184 488
- US-A1- 2006 202 448

## Beschreibung

### Technisches Gebiet

Die Erfindung betrifft ein Airbagklappensystem zum bei Minustemperaturen fragmentfreien Auslösen eines Airbags einer Fahrzeugarmatur.

Auch betrifft die vorliegende Erfindung eine Deckelanordnung für ein vorgenanntes Airbagklappensystem.

Des Weiteren betrifft die vorliegende Erfindung eine Schusskanalanordnung für ein vorgenanntes Airbagklappensystem.

### Hintergrund der Erfindung

Bei der Herstellung eines Fahrzeugs werden Airbags aus Sicherheitsgründen und zur Verbesserung des Designs an einer Fahrzeugarmatur mit einer zu einem Fahrzeuginnenraum weisenden Deckelanordnung abgedeckt. Damit der Airbag im Falle eines Auslösens funktioniert, ist die Deckelanordnung so ausgelegt, dass sie an vordefinierten Bruchstellen als Randvertiefungen im Vergleich zu den sonstigen Bereichen der Deckelanordnung leicht brechen beziehungsweise leicht reißen kann und den Airbag dadurch passieren lässt. Der Airbag durchschlägt beziehungsweise durchbricht die Deckelanordnung in einem vorher festgelegten Sollbruchbereich. Ein Sollbruchbereich wird von einer Sollbruchkontur umgeben, die durch die Randvertiefungen definiert ist. Im Falle einer Belastung durch den Airbag, soll der Sollbruchbereich entlang der Sollbruchkontur brechen beziehungsweise reißen. Hierzu wird die Deckelanordnung meist entlang der Sollbruchkontur geschwächt. Im Stand der Technik sind verschiedene Verfahren zur Schwächung der Sollbruchkontur bekannt. Die Verfahren lassen sich im Wesentlichen in zwei Gattungen gliedern. Zum einen in nachträgliche Verfahren, die nach der Herstellung der Deckelanordnung angewandt werden, beispielsweise durch thermische oder mechanische Bearbeitung wie Lasern, und zum anderen in integrale Verfahren, die integral bei der Herstellung der Deckelanordnung angewandt werden. Verfahren nach der Herstellung der Deckelanordnung sind durch zusätzliche Maschinen, Arbeitsschritte, Lagerkosten, Handhabungs- und Wartezeiten teuer und zeitaufwändig. Bei Verfahren, die integral bei der Herstellung der Deckelanordnung eingesetzt werden, zeichnet sich oft die Schwächung des Verkleidungselements durch eine Sollbruchkontur auf einer Sichtseite, die den Fahrzeuginsassen zugewandt ist, ab, so dass Linien und unterschiedliche Konturen und Strukturen zu sehen sind, die meist als unästhetisch und störend empfunden werden. Um eine ästhetische, optisch makellose und zugleich funktionale Fläche auf der Sichtseite herzustellen sind weitere Maschinen, Arbeitsschritte, Lagerkosten, Handhabungs- und Wartezeiten nötig, was die Herstellungskosten zusätzlich erhöht.

Als Airbag wird in der Regel ein Teil des Insassenrückhaltesystems von Kraftfahrzeugen bezeichnet. Der Airbag im Kraftfahrzeug besteht üblicherweise aus einem Kunststoffsack, der sich bei einem Unfall innerhalb von 20 bis 50 Millisekunden mit einem lauten Knall zwischen dem Fahrzeuginsassen und Teilen des Fahrzeuginnenraumes entfaltet. Dadurch wird verhindert, dass der Fahrzeuginsasse gegen harte Teile des Innenraumes wie Lenkrad oder Fahrzeugarmatur prallt. Das Airbagsystem wird nur durch starke negative Beschleunigungswerte ausgelöst, jenseits von Werten, wie sie alleine durch eine Vollbremsung erreicht werden. Fahrzeuge können mit einer Vielzahl von Airbags ausgerüstet sein. Je nach Fahrzeugverzögerung und Kollisionswinkel werden nur bestimmte Airbags ausgelöst.

Per Gesetzgebung ist in vielen Jurisdiktionen vorgesehen, dass Airbags zuverlässig funktionieren müssen und beim Auslösen keine Fragmente entstehen dürfen, die Fahrzeuginsassen verletzen könnten. In diesem Rahmen hat sich bei Automobilherstellern ein Testverfahren etabliert, bei dem Airbags in einem Bereich von einschließlich minus 35 Grad Celsius bis zu mindestens 80 Grad Celsius in unterschiedlichen Versuchen ausgelöst werden. Viele der zur Zeit verwendeten Sichtkunststoffe der Deckelanordnung können diesem Anspruch nicht gerecht werden, da sie bei niedrigen Temperaturen verspröden und sich mit Auslösen des Airbags durch aus dem Airbagklappensystem herausbrechende Teile Splitter und scharfe Kanten bilden. Das Auslösen erfolgt somit nicht fragmentfrei. Weiterhin ist zu berücksichtigen, dass die Kosten gering zu halten sind. So sind bei niedrigen Temperaturen weniger spröde Kunststoffe üblicherweise teurer. Da aus ästhetischen Gründen das Material zwischen der für die Fahrzeuginsassen optisch sichtbaren Deckelanordnung und der weiteren Fahrzeugarmatur gleich bleiben sollte, ist ein günstiger Kunststoff wegen der großflächigen Nutzung bevorzugt.

Aus der US 2005/0184488 A1 ist eine Airbagvorrichtung nach dem Oberbegriff von Anspruch 1 bekannt, wobei die Airbagvorrichtung eine Innenplatte eines Fahrzeugs verwendet. Die Innenplatte hat einen rechteckigen Bruchöffnungsabschnitt, der durch mindestens eine Scharniernut und eine Bruchrille definiert ist, die auf einer Innenfläche des Innenpaneels durch Bestrahlung mit Laserimpulsen gebildet wird. Die Bruchrille enthält abwechselnd Brückenabschnitte und durchgehende Lochabschnitte. Jeder der Brückenabschnitte enthält kein lasergeformtes Loch und hat eine Dicke, die der Innenplatte entspricht. Jeder der durchgehenden Lochabschnitte besteht aus ersten Löchern für den Bruch, die eine erste Tiefe haben und nacheinander zwischen benachbarten Brückenabschnitten durch Bestrahlung mit Laserimpulsen gebildet werden, und zweiten Löchern, die eine zweite Tiefe haben, die kleiner als die erste Tiefe ist, und die jeweils zwischen benachbarten ersten Löchern durch Bestrahlung mit Laserimpulsen gebildet werden, um einen Teil der ursprünglichen Dicke zwischen den benachbarten ersten Löchern zu entfernen.

Aus der EP 1700755 A2 ist zur Erleichterung der Herstellung mit hoher Maßgenauigkeit eine Abdeckung einer Airbagvorrichtung bekannt mit einem beweglichen Türrahmenelement und einem Türrahmenbefestigungselement, welches an einer Rückseite einer Innenverkleidung versehen ist, bei der sich ein Türteil öffnet, während das bewegliche Türrahmenelement angehoben wird. Wenn eine Aufblasvorrichtung zum Ausblasen von Gas betätigt wird, wird ein bewegliches Türrahmenelement nach oben bewegt, indem es von einem sich ausdehnenden Airbag nach oben gedrückt wird. Die Modulabdeckung wird entlang einer Aufreißlinie aufgeplatzt und ein Türteil wird abgeschnitten und von der umgebenden Modulabdeckung getrennt. Der Türabschnitt wird zusammen mit dem beweglichen Element des Türrahmens weiter nach oben bewegt, und eine Aufreißlinie des Türabschnitts wird durch den Druck des Airbags zum Platzen gebracht. Der Türabschnitt und jeder der Verkleidungsplattenabschnitte beginnen sich wie eine Tür zu öffnen, die in zwei Richtungen nach links und rechts getrennt wird.

Aus der EP 1403148 A2 ist ein Abdeckkörper einer Fahrzeug-Airbagvorrichtung bekannt, bestehend aus einem Abdeckabschnitt, der einstückig mit einem Innenplattenkörper ausgebildet ist und der einen Türabschnitt aufweist, der durch eine in einer Rückseite des Innenplattenkörpers ausgebildete Reißnaht definiert ist, und einem mit einer Rückseite des Abdeckabschnitts verbundenen Verstärkungsabschnitt.

Aus der CN 107804266 A ist eine verdeckte Airbagtür einer geschäumten Instrumententafel bekannt. Die Airbagtür besteht aus einem Airbagtürrahmen, am äußeren Ende des Airbagtürrahmens ist ein mit dem Airbagtürrahmen integriertes Einzeltürblatt angeordnet, am Rand einer Seite des Einzeltürblatts sind Verstärkungsscharniere angeordnet, in den anderen Rändern sind vorgefertigte Schwächungsnuten ausgebildet. Die verdeckte Airbagtür der geschäumten Instrumententafel hat die Vorteile, dass die Konstruktionsstruktur optimiert ist, der Produktionsprozess vereinfacht ist, die Investition in ein Schweißwerkzeug, eine Schweißausrüstung, ein Fräserschwächungswerkzeug und eine Fräserschwächungsausrüstung nicht mehr benötigt wird, die Produktionskosten reduziert sind, die Akzeptanz der Airbagauslösung verbessert ist und die Erscheinungsqualität verbessert ist.

Aus der US 2006/202448 A1 eine Airbag-Vorrichtungsabdeckung bekannt, wobei die Airbag-Vorrichtungsabdeckung eine Modulabdeckung mit einem Modulabdeckungs-Hauptkörper und einen Türrahmen mit einem beweglichen Türrahmenelement und einem festen Türrahmenelement hat. Wenn eine Aufblasvorrichtung Gas ausstößt, wird das bewegliche Element des Türrahmens durch den sich ausdehnenden Airbag nach oben bewegt. Die Modulabdeckung wird entlang einer Reißlinie gebrochen, und ein Türteil wird abgeschnitten und von der umgebenden Modulabdeckung getrennt. Der Türabschnitt wird mit dem beweglichen Türrahmenelement weiter nach oben bewegt, und eine Aufreißlinie des Türabschnitts wird durch den Druck des Airbags zum Platzen gebracht. Der Türabschnitt und seine Verkleidungsplattenabschnitte öffnen sich wie eine Tür, und der Airbag wird in eine Fahrzeugkabine ausgedehnt. Das feste Element, das bewegliche Element und die Modulabdeckung sind eine doppelt gespritzte, integral geformte Einheit, was die Herstellung einer Abdeckung mit hoher Maßgenauigkeit ermöglicht.

### Beschreibung der Erfindung

Ausgehend von dieser Situation ist es eine Aufgabe der vorliegenden Erfindung, ein Airbagklappensystem mit einer Deckelanordnung anzubieten, wobei das Airbagklappensystem bei Minustemperaturen, insbesondere bei minus 35 Grad Celsius, ein fragmentfreies Auslösen eines Airbags einer Fahrzeugarmatur ermöglicht.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Airbagklappensystem mit einer kostengünstigen Deckelanordnung zum bei Minustemperaturen fragmentfreien Auslösen eines Airbags einer Fahrzeugarmatur angegeben.

Demnach wird die Aufgabe gelöst durch ein Airbagklappensystem zum bei Minustemperaturen fragmentfreien Auslösen eines Airbags einer Fahrzeugarmatur, aufweisend:
eine zu einem Fahrzeuginnenraum weisende Deckelanordnung, die ein Polymer aufweist, wobei die Deckelanordnung einen Rahmenkörper mit mindestens einem Klappensegment aufweist, das Randvertiefungen aufweist;
wobei die Randvertiefungen mindestens eine Rechteckgrundstruktur erzeugen; und eine mit der Deckelanordnung verbundene Schusskanalanordnung, die ein Polymer aufweist, wobei die Schusskanalanordnung einen Grundkörper und mindestens einen Klappenkörper aufweist;
wobei der Grundkörper den Rahmenkörper deckend ausgebildet ist und wobei der mindestens eine Klappenkörper das mindestens eine Klappensegment deckend ausgebildet ist;
wobei die Randvertiefungen der Rechteckgrundstruktur der Deckelanordnung mindestens zwei unterschiedliche Materialstärken aufweisen.

Nachfolgend werden die Grundidee der Erfindung und einzelne Elemente des beanspruchten Erfindungsgegenstandes gemäß ihrer Nennung im Anspruchssatz erläutert und weiter nachfolgend besonders bevorzugte Ausgestaltungen des Erfindungsgegenstandes beschrieben. Sämtliche Erläuterungen sind beschreibende und bevorzugte, jedoch nicht limitierende Beispiele.

Ein wesentlicher Punkt der Erfindung ist, dass Komponenten des Airbagklappensystems im Sinne einer Tür-Deckel-Scharnier-Kombination derart aufeinander abgestimmt sind, dass sie auch bei niedrigen Temperaturen mit spröden Kunststoffen funktionieren beziehungsweise den Airbag fragmentfrei auslösen lassen. Dies wird durch eine geschickte Ausgestaltung der Randvertiefungen als Aufrisslinien durch eine unterschiedliche Verjüngung des Materials ermöglicht. Da sicherzustellen ist, dass die Deckelanordnung nicht durch die Gewichtslast von beispielsweise auf die Fahrzeugarmatur gelegten Objekten zerstört wird, wird durch die Schusskanalanordnung, und insbesondere durch deren Klappenkörper, Steifigkeit in das Airbagklappensystem eingebracht. Diese Schusskanalanordnung ist mit der Deckelanordnung verbunden.

Vorteilhaft ist, dass umständliche Herstellungsschritte wie nachträgliches Lasern der Deckelanordnung entfallen. Stattdessen kann die unterschiedliche Materialstärke unmittelbar und mit einfachen Mitteln endformgetreu hergestellt werden, beispielsweise durch ein Gießverfahren.

Die unterschiedliche Verjüngung des Materials beziehungsweise der Randvertiefungen hat die technische Wirkung, dass einige Randvertiefungen als sich zuerst öffnende Öffnungsvertiefungen und andere Randvertiefungen für zu schwenkende Klappensegmente beziehungsweise Klappenkörper als Schwenkvertiefungen dienen.

Eine als Schwenkvertiefung ausgebildete Randvertiefung hat die Wirkung, dass ein Klappensegment beim Auslösen eines Airbags um eine jeweilige Achse der Schwenkvertiefung schwenkt. Grundsätzlich kann sich das Klappensegment oder können sich die Klappensegmente dabei vom Rahmenkörper lösen oder mit diesem verbunden bleiben. Sofern ein Lösen erfolgt, addiert sich zu der Schwenkbewegung eine translatorische Bewegung.

Als Öffnungsvertiefungen ausgebildete Randvertiefungen haben als Sollbruchvertiefungen die Wirkung, dass die Klappensegment- und Klappenkörperanordnung beim Auslösen eines Airbags durch den Gegendruck des Airbags kontrolliert geöffnet wird, so dass kein Material ungewünscht fragmentiert.

Grundsätzlich ist davon auszugehen, dass die Funktion einer Randvertiefung als Schwenkvertiefung oder Öffnungsvertiefung im Wesentlichen von der Materialstärke der entsprechenden Randvertiefung abhängt. Es hat sich somit herausgestellt, dass durch die Auswahl der Materialstärke der entsprechenden Randvertiefung das Öffnungsverhalten der Deckelanordnung und somit des Airbagklappensystems mitbestimmt wird.

Ein weiterer Einfluss ist die Anordnung der jeweiligen Randvertiefung relativ zur Angriffsfläche des Gegendrucks des Airbags.

Ein noch weiterer Einfluss ist die Werkstoffauswahl der Deckelanordnung und/oder der Schusskanalanordnung.

Als Minustemperaturen gelten Temperaturen unter null Grad Celsius. Besonders ist vorgesehen, dass der Airbag zwischen sämtlichen Temperaturbereichen zwischen null Grad Celsius und einschließlich minus 35 Grad Celsius fragmentfrei auslöst. Dabei ist vorgesehen, dass der Airbag ebenfalls bei Temperaturen über null Grad Celsius, insbesondere bis mindestens 80 Grad Celsius fragmentfrei auslöst. Allerdings besteht insbesondere bei Temperaturen unter null Grad Celsius das Problem, dass Polymere, also Kunststoffe, spröde sind beziehungsweise eine negative Schlagzähigkeit aufweisen.

Ein Polymer ist ein chemischer Stoff, der aus Makromolekülen besteht. Die Makromoleküle eines Stoffes sind aus einer oder mehreren Struktureinheiten, den sogenannten konstitutionellen Repetiereinheiten oder Wiederholeinheiten, aufgebaut. In vielen Fällen besteht ein Polymer aus nicht identischen Makromolekülen, da die Anzahl der Wiederholeinheiten und damit die Molekülmasse der Moleküle variiert. Synthetische oder halbsynthetische Polymere sind eine Hauptkomponente für die Herstellung von Kunststoffen.

Fragmentfrei bedeutet im Sinne der Erfindung, dass kein ungewünschter Bruch von Komponenten des Airbagklappensystems erfolgt. Insbesondere bei niedrigen Temperaturen, insbesondere unter null Grad Celsius, besteht bei Material regelmäßig das Risiko spröder zu brechen als dies bei Temperaturen über null Grad Celsius der Fall wäre. Bei einem Airbagklappensystem bedeutet ein derart spröder Bruch, dass Fahrzeuginsassen durch scharfkantiges Bruchmaterial beim Auslösen des Airbags bei niedrigen Temperaturen verletzt werden können. Derartiges Bruchmaterial besteht aus Fragmenten der temperaturbeeinflusst zerbrochenen Komponenten des Airbagklappensystems. Demnach bedeutet die Formulierung fragmentfrei, dass kein vorgenannter, temperaturbeeinflusster Bruch entsteht und somit zusätzliches, zerborstenes Bruchmaterial ausbleibt.

Die zu einem Fahrzeuginnenraum weisende Deckelanordnung ist die oberste Deckschicht des Airbagklappensystems, so dass diese von den Fahrzeuginsassen auch optisch wahrgenommen wird. Somit ist das Polymer auch als Sichtkunststoff zu verstehen.

Der Fahrzeuginnenraum gehört nicht zum Schutzumfang und ist nur zur Beschreibung der Anordnung aufgeführt, insbesondere um darzustellen, dass die Deckelanordnung die für die Fahrzeuginsassen sichtbare Anordnung des Airbagklappensystems ist.

Auch die vollständige Fahrzeugarmatur ist nicht Bestandteil des Schutzumfangs, sondern gilt als Orientierung für die Anordnung des Airbags. Dabei kann es sich insbesondere um einen Beifahrerairbag handeln. Allerdings ist beispielsweise bei autonom fahrenden Fahrzeugen oder bei Fahrzeugen mit alternativen Lenksystemen möglich, dass das Fahrzeug mehrere Airbagklappensysteme nach Lehre der Erfindung aufweist. Diese können insbesondere an der Fahrzeugarmatur angeordnet sein.

Die Schusskanalanordnung ist vorgesehen, um die mit den Randvertiefungen mechanisch geschwächte Deckelanordnung zu stabilisieren. Dabei ist ein Grundkörper der Schusskanalanordnung deckend zum Rahmenkörper der Deckelanordnung ausgebildet. Da die Deckelanordnung, und somit auch deren Rahmenkörper, die zum Fahrzeuginnenraum weisenden Komponenten sind, ist der Grundkörper innerhalb einer Fahrzeugarmatur angeordnet. Dabei ist die Schusskanalanordnung ausgebildet, um die Deckelanordnung stützend zu schützen. Beispielsweise wenn schwere Lasten auf die Fahrzeugarmatur gelegt wird, insbesondere auf das Airbagklappensystem, könnte es passieren, dass die Randvertiefungen aufreißen, wenn keine Stilisierung vorhanden wäre. Ähnlich wie der Grundkörper den Rahmenkörper stabilisiert, deckt jeder der beiden Klappenkörper jeweils ein Klappensegment stabilisierend. Somit wird auf die Deckelanordnung wirkende Last direkt an den Grundkörper beziehungsweise an die Klappenkörper der Schusskanalanordnung weitergeleitet, sodass das Risiko eines Risses der Randvertiefungen deutlich reduziert ist. Die Klappenkörper sind zum Auslösen des Airbags lösbar mit dem Grundkörper verbunden, insbesondere über Verbindungssegmente.

Die Randvertiefungen der Rechteckgrundstrukturen der Deckelanordnung weisen mindestens zwei unterschiedliche Materialstärken auf. Somit kann gesteuert werden, dass im Falle eines Auslösens des Airbags erst die Randvertiefungen mit der dünneren Materialstärke und anschließend die Randvertiefungen mit der größeren, also dickeren, Materialstärke aufreißen. Durch dieses Steuern des Aufreißens der Randvertiefungen kann vermieden werden, dass Spannungen in beziehungsweise zwischen Komponenten des Airbagklappensystems, insbesondere der Deckelanordnung und der Schusskanalanordnung, zu einem unkontrollierten Zerbersten beziehungsweise Fragmentieren führen. Die Belastung in den Komponenten entweicht durch das Entlasten durch das gesteuerte Aufreißen der Randvertiefungen. Somit kann umgangen werden, dass temperaturbedingt spröde Komponenten die Fahrzeuginsassen verletzen.

Das Airbagklappensystem nach Lehre der Erfindung ist somit geeignet, trotz spröder Kunststoffe beziehungsweise trotz spröder Polymere, beziehungsweise Sichtkunststoffe, bei einschließlich minus 35 Grad Celsius ohne Fragmentierung auszulösen. Überdies funktioniert das Airbagklappensystem auch in Temperaturbereichen bis zu mindestens 80 Grad Celsius.

Erfindungsgemäß ist vorgesehen, dass die zwei unterschiedlichen Materialstärken der Randvertiefungen der mindestens einen Rechteckgrundstruktur aufgeteilt sind in eine erste Materialstärke und in eine zweite Materialstärke;
wobei die Randvertiefungen mit der ersten Materialstärke als Öffnungsvertiefungen mindestens eine U-Struktur bilden, die eine Quervertiefung und zwei Parallelvertiefungen aufweist; und wobei mindestens eine weitere Randvertiefung mit der zweiten Materialstärke, die größer ist als die erste Materialstärke, als Schwenkvertiefung ausgebildet ist, die sich jeweils von einem Ende einer ersten Parallelvertiefung zu einem jeweils gegenüberliegenden Ende der zweiten Parallelvertiefung erstecken. Hierdurch entsteht die Rechteckgrundstruktur, wobei das U der U-Struktur eine geringere Materialstärke aufweist und die das U zu der Rechteckgrundstruktur, also einer O-Struktur, schließenden Schwenkvertiefung eine größere, also massivere Materialstärke aufweist. Somit öffnen sich die Randvertiefungen der U-Struktur, beziehungsweise die Quervertiefung und die beiden Parallelvertiefungen zuerst. Der ausgelöste beziehungsweise ausdringende Airbag presst somit nicht mehr unkontrolliert gegen Material, das in der Folge fragmentieren könnte beziehungsweise würde, sondern öffnet die Randvertiefungen der U-Struktur zuerst, woraufhin das oder die Klappensegmente mit ihrem jeweiligen Klappenkörper um eine jeweilige Achse schwenken, die jeweilig entlang ihrer Schwenkvertiefung verläuft.

Gemäß einer vorteilhaften Ausführungsform der Erfindung ist vorgesehen, dass die Deckelanordnung zwei Klappensegmente aufweist, die die Randvertiefungen aufweisen; wobei die beiden Klappensegmente derart stoßend zueinander angeordnet sind, dass ihre Randvertiefungen zwei angrenzende Rechteckgrundstrukturen erzeugen; und dass die Schusskanalanordnung zwei Klappenkörper aufweist;
wobei jeweils ein Klappenkörper jeweils ein Klappensegment deckend ausgebildet ist;
wobei die Randvertiefungen der Rechteckgrundstrukturen der Deckelanordnung mindestens zwei unterschiedliche Materialstärken aufweisen. Die Anordnung von zwei Klappensegmenten ermöglicht ein relativ zentrales Ausdringen des Airbags aus dem Airbagklappensystem.

Die Deckelanordnung weist einen Rahmenkörper auf, der zwei Klappensegmente aufweist. Diese Klappensegmente grenzen derart aneinander, dass zwei angrenzende Rechteckgrundstrukturen entstehen. Anders formuliert wird eine Kontur erzeugt, die in etwa einer acht entspricht oder dem griechischen Großbuchstaben Theta. Die Rechteckgrundstrukturen sind dabei insbesondere derart angeordnet, dass etwaige Haupterstreckungsachsen parallel zueinander angeordnet sind. Auch, wenn ihre Außenecken gegebenenfalls abrundet ist, ähnelt die jeweilige Grundstruktur einem Rechteck. Dies bedeutet auch, dass es eine quadratische Grundstruktur sein kann oder eine flächige Grundstruktur mit Rundungen. Die Formulierung Rechteckgrundstrukturen ist somit eine näherungsweise Beschreibung ohne unmittelbar limitierende Bedeutung.

Gemäß einer vorteilhaften Ausführungsform der Erfindung ist vorgesehen, dass die zwei unterschiedlichen Materialstärken der Randvertiefungen der angrenzenden Rechteckgrundstrukturen aufgeteilt sind in eine erste Materialstärke und in eine zweite Materialstärke;
wobei die Randvertiefungen mit der ersten Materialstärke als Öffnungsvertiefungen mindestens eine H-Struktur bilden, die eine Quervertiefung und zwei Parallelvertiefungen aufweist;
und wobei die Randvertiefungen mit der zweiten Materialstärke, die größer ist als die erste Materialstärke, als zwei Schwenkvertiefungen ausgebildet sind, die sich jeweils von einem Ende einer ersten Parallelvertiefung zu einem jeweils gegenüberliegenden Ende der zweiten Parallelvertiefung erstecken. Hierdurch entstehen die beiden angrenzenden Rechteckgrundstrukturen, wobei das H der H-Struktur eine geringere Materialstärke aufweist und die beiden das H zu zwei Rechteckgrundstrukturen schließenden Schwenkvertiefungen eine größere, also massivere Materialstärke aufweisen. Somit öffnen sich die Randvertiefungen der H-Struktur, beziehungsweise die Quervertiefung und die beiden Parallelvertiefungen zuerst. Der ausgelöste beziehungsweise ausdringende Airbag presst somit nicht mehr unkontrolliert gegen Material, das in der Folge fragmentieren könnte beziehungsweise würde, sondern öffnet die Randvertiefungen der H-Struktur zuerst, woraufhin die Klappensegmente mit ihrem jeweiligen Klappenkörper um eine jeweilige Achse schwenken, die jeweilig entlang ihrer Schwenkvertiefung verläuft. Dabei kann es sein, dass sich die Klappensegmente und/oder ihre jeweiligen Klappenkörper ebenfalls vom Rahmenkörper beziehungsweise vom Grundkörper lösen, wobei dies durch den Schwenkvorgang derart erfolgt, dass die Fahrzeuginsassen nicht mit den sich potentiell lösenden Komponenten zusammenstoßen. Insbesondere liegt dies daran, dass der Airbag schneller durch die entstehende Öffnung dringt als sich die Komponenten vollständig lösen könnten, sodass der Airbag die dem Fahrzeuginsassen nächste Komponente ist. Optional können die Klappensegmente und/oder ihre jeweiligen Klappenkörper während und nach dem Auslösen des Airbags auch unter physischer Verbindung am Airbagklappensystem angeordnet bleiben. Es handelt sich in jedem Fall um ein fragmentfreies Auslösen.

Erfindungsgemäß ist vorgesehen, dass die Öffnungsvertiefungen derart entlang Außenecken der einen oder beiden angrenzenden Rechteckgrundstrukturen angeordnet sind, dass sich die Öffnungsvertiefungen zumindest teilweise über eine jeweils definierte Strecke entlang einer jeweiligen Achse der Schwenkvertiefungen erstrecken. Dies bedeutet, dass die die H-Struktur zu den beiden Rechteckgrundstrukturen schließenden Schwenkvertiefungen entlang ihrer Achse derart verkürzt sind, dass ein Anteil der Randvertiefungen entlang der Achsen der Schwenkvertiefungen als Öffnungsvertiefungen ausgebildet sind. Es hat sich herausgestellt, dass hierdurch insbesondere vermieden werden kann, dass etwaige Fragmente aus den Eckbereichen des Rahmenkörpers oder der Klappensegmente herausbrechen. Anstelle einer verspannenden Kraftübertragung erfolgt eine Entspannung durch Aufreißen der Randvertiefungen in den Eckbereichen. Somit wird das Risiko der Verletzung von Fahrzeuginsassen noch weiter vermieden.

Gemäß einer vorteilhaften Ausführungsform der vorgenannten Erfindung ist vorgesehen, dass die definierten Strecken der Öffnungsvertiefungen entlang einer jeweiligen Achse der Schwenkvertiefungen zwischen einschließlich zwei Millimeter bis einschließlich zehn Millimeter, vorzugsweise sieben Millimeter betragen. Es hat sich herausgestellt, dass in dieser Größenordnung ein zuverlässiges Schwenken der Klappensegmente möglich ist und zudem deren Fragmentieren bei niedrigen Temperaturen unterbleibt.

Gemäß einer vorteilhaften Ausführungsform einer der vorgenannten Erfindungen ist vorgesehen, dass die Außenecken abgerundet sind. Hierdurch ergibt sich zudem eine vorteilhafte Kraftflussverteilung, sodass das Fragmentieren bei niedrigen Temperaturen unterbleibt.

Gemäß einer vorteilhaften Ausführungsform der Erfindung ist vorgesehen, dass die zweite Materialstärke um einen Faktor zwischen einschließlich zwei bis einschließlich vier, vorzugsweise um den Faktor drei, größer ist als die erste Materialstärke. Es hat sich herausgestellt, dass größere Abweichungen das kontrollierte, initiale Aufreißen der ersten Randvertiefungen negativ beeinflussen können und kleinere Abweichungen zu einem gleichzeitigen Aufreißen der Randvertiefungen führen können. Besonders zuverlässige Ergebnisse haben sich gezeigt bei einer ersten Materialstärke von 0,2 Millimeter und einer zweiten Materialstärke von 0,6 Millimeter.

Die Messung einer Materialstärke erfolgt dabei jeweils an der Stelle der geringsten Material stärke.

Gemäß einer vorteilhaften Ausführungsform der Erfindung ist vorgesehen, dass sich mindestens ein Klappensegment, vorzugsweise zwei Klappensegmente, beim Auslösen des Airbags jeweils um eine Achse einer jeweiligen Schwenkvertiefung schwenkend von dem Rahmenkörper löst beziehungsweise lösen. Dies gilt jedoch nicht als Fragment im Sinne der Erfindung. Hierbei liegt ein Vorteil darin, dass kein zusätzlicher Aufwand betrieben werden muss, um die Klappensegmente am Rahmenkörper zu halten. Trotzdem werden die Fahrzeuginsassen nicht verletzt, da der ausströmende Airbag durch die sich zuerst öffnenden Vertiefungen dringt und somit zwischen einem Fahrzeuginsassen und den Klappensegmente angeordnet ist.

Gemäß einer vorteilhaften Ausführungsform der Erfindung ist vorgesehen, dass sich mindestens ein Klappensegment, vorzugsweise zwei Klappensegmente, beim Auslösen des Airbags jeweils um eine Achse einer jeweiligen Schwenkvertiefung schwenkend am Rahmenkörper bewegt beziehungsweise bewegen. Somit bleibt ein oder beide Klappensegmente mit der Deckelanordnung verbunden. Hierbei ist vorteilhaft, dass auch bei einer ungewöhnlichen Position des jeweiligen zu schützenden Fahrzeuginsassen während des Auslösens des Airbags verhindert werden kann, dass ein Klappensegment verletzend an den Fahrzeuginsassen gelangt.

Es ist auch möglich, dass ein Klappensegment am Rahmenkörper verbleibt und das zweite Klappensegment durch das Auslösen des Airbags vom Rahmenkörper losgelöst wird.

Gemäß einer vorteilhaften Ausführungsform der Erfindung ist vorgesehen, dass die Randvertiefungen an einer von einem Fahrzeuginnenraum entfernten Fläche der Deckelanordnung eine mit einer Spitze zum Fahrzeuginnenraum weisende Spitzenkontur, insbesondere eine Dreieckkontur, aufweisen. Die entlang der Randvertiefungen verlaufende Spitze ermöglicht eine gezielte Rissausdehnung, sodass sichergestellt wird, dass ein erstes Materialversagen der Deckelanordnung kontrolliert an den Stellen des dünnsten Materials erfolgt. Somit optimiert dies das Öffnen des Airbagklappensystems.

Gemäß einer vorteilhaften Ausführungsform der Erfindung ist vorgesehen, dass die Randvertiefungen an einer zu einem Fahrzeuginnenraum nahen Fläche der Deckelanordnung eine mit einer Wölbung vom Fahrzeuginnenraum weg weisende Kontur, insbesondere eine U-Kontur, aufweisen. Dass die Wölbung eine vom Fahrzeuginnenraum weg weisende Kontur aufweist bedeutet mit anderen Worten, dass sie bauchig zur Schusskanalanordnung weisend angeordnet ist. Dies wirkt einerseits ästhetisch angenehm. Andererseits lässt sich eine nach innen gewölbte Randvertiefung gut reinigen, sodass im Falle eines Auslösens des Airbags vermieden werden kann, dass ein Fahrzeuginsasse durch spitze Partikel in der Randvertiefung verletzt wird. Zudem lässt sich hierdurch sicherstellen, dass die Rissentstehung an den Randvertiefungen mit erhöhter Zuverlässigkeit erfolgt.

Gemäß einer vorteilhaften Ausführungsform der Erfindung ist vorgesehen, dass die Deckelanordnung und die Schusskanalanordnung über Zentrierrippen und/oder über Schweißdomen miteinander verbunden sind, wobei sich die Zentrierrippen und/oder Schweißdomen insbesondere von einer von einem Fahrzeuginnenraum entfernten Fläche der Deckelanordnung in Richtung der Schusskanalanordnung erstrecken, wobei die Schusskanalanordnung Verbindungsöffnungen zur Verbindung mit den Zentrierrippen und/oder mit den Schweißdomen aufweist. Hierbei handelt es sich um eine günstige und zudem zuverlässige Verbindungsmöglichkeit zwischen Deckelanordnung und Schusskanalanordnung. Es hat sich herausgestellt, dass hierdurch eine hinreichend gute Kraftübertragung zwischen Deckelanordnung und Schusskanalanordnung derart erfolgt, dass ein ungewolltes Aufreißen der Randvertiefungen unterbleibt.

Gemäß einer vorteilhaften Ausführungsform der Erfindung ist vorgesehen, dass die beiden Klappenkörper über Verbindungssegmente miteinander und/oder mit dem Grundkörper verbunden sind. Durch diese Verbindungssegmente kann eine Grundstabilität geschaffen werden, die sich im Bedarfsfall, nämlich beim Auslösen des Airbags, schnell wieder lösen lässt. Insbesondere ist hierzu vorgesehen, dass die Verbindungssegmente voneinander beabstandet sind, sodass Gewicht gespart wird und die Funktion trotzdem vorhanden ist.

Gemäß einer vorteilhaften Ausführungsform der Erfindung ist vorgesehen, dass die Deckelanordnung und/oder die Schusskanalanordnung teilweise oder vollständig aus einem thermoplastischen Polymer besteht beziehungsweise bestehen. Hierbei handelt es sich um eine günstige Werkstoffauswahl, die zuverlässig massenhaft verwendet werden kann. Möglich sind auch duroplastische oder andere Kunststoffe.

Gemäß einer vorteilhaften Ausführungsform der Erfindung ist vorgesehen, dass das Polymer der Deckelanordnung und/oder der Schusskanalanordnung mindestens ein thermoplastisches Polycarbonat, PC, und mindestens ein thermoplastisches Terpolymer als Mischung aufweist, wobei der Anteil des PC vorzugsweise zwischen einschließlich 10 Gewichtsprozent bis einschließlich 90 Gewichtsprozent und/oder der Anteil des thermoplastischen Terpolymers vorzugsweise zwischen einschließlich 10 Gewichtsprozent bis einschließlich 90 Gewichtsprozent der Mischung beträgt. Es hat sich herausgestellt, dass bei dieser Werkstoffmischung eine ausreichende Stabilität des Airbagklappensystems möglich ist, wobei eine günstige Beschaffung sowie Verarbeitung der Werkstoffmischung möglich ist. Insbesondere kann somit die gesamte Fahrzeugarmatur großflächig im optisch relevanten Bereich mit dieser Werkstoffmischung beschichtet sein, die günstig ist und in Verbindung mit den weiteren Erfindungsmerkmalen trotzdem eine Lösung der erfindungsgemäßen Aufgabe ermöglicht.

Gemäß einer vorteilhaften Ausführungsform der vorgenannten Erfindung ist vorgesehen, dass das thermoplastische Terpolymer Acryl-Butadien-Styrol, ABS, ist, sodass die Mischung mindestens eine Mischung aus Polycarbonat und Acryl-Butadien-Styrol, PC/ABS, ist. Dies ist eine besonders bevorzugte Werkstoffmischung, insbesondere mit Hinblick auf Preis, Verfügbarkeit und Massenproduktionsfähigkeit. Trotzdem kann in Verbindung mit den Randvertiefungen unterschiedlicher Materialstärke eine Fragmentierung bei niedrigen Temperaturen vermieden werden.

Polycarbonate, PC, sind thermoplastische Kunststoffe beziehungsweise thermoplastische Polymere. Sie sind formal Polyester der Kohlensäure. Die Herstellung von Polycarbonaten kann durch Polykondensation von Phosgen mit Diolen erfolgen. Praktische Bedeutung haben zur Synthese insbesondere aromatische Bishydroxyverbindungen, wie beispielsweise Bisphenol A. Alternativ zum grundsätzlich gefährlichen Phosgen kann auch eine Umesterung mit Kohlensäurediestern erfolgen. Polycarbonate weisen in der Regel einen Kristallitanteil von weniger als fünf Gewichtsprozent auf und gelten daher als amorph. Sie zeichnen sich durch hohe Festigkeit, Schlagzähigkeit, Steifigkeit und Härte aus. Außerdem sind Polycarbonate gute Isolatoren gegen elektrischen Strom. Polycarbonate sind beständig gegenüber Wasser, vielen Mineralsäuren und wässrigen Lösungen von neutralen Salzen und Oxidationsmitteln. Auch einige unpolare organische Lösungsmittel wie Kohlenwasserstoffe und viele Öle und Fette greifen Polycarbonate nicht an.

Acrylnitril-Butadien-Styrol-Copolymere, ABS, sind thermoplastische Terpolymere, bei denen an eine Polybutadien-basierte Hauptkette kovalent Seitenketten aus Styrol-Acrylnitril-Copolymer, SAN, angebunden sind. Da die beiden Komponenten nicht ineinander löslich sind, tritt eine Mikrophasenseparation auf, die durch die eingelagerten, weichen Polybutadienpartikel in der kontinuierlichen, spröden SAN-Hauptphase die Schlagzähigkeit des Materials erhöht. Die Mengenverhältnisse der eingesetzten Monomere variieren üblicherweise im Bereich von 5 bis 30 Gewichtsprozent Butadien, sowie 15 bis 35 Gewichtsprozent Acrylnitril und 40 bis 60 Gewichtsprozent Styrol. Die ISO-Norm ISO 472:2013 (de) bezeichnet Acrylnitril-Butadien-Styrol-Kunststoff als Kunststoff aus Terpolymeren und/oder Mischungen von aus Acrylnitril, Butadien und Styrol hergestellten Polymeren und Copolymeren. Als technischer Kunststoff besteht ABS sehr häufig aus einer Werkstoffmischung des Terpolymers mit der reinen Hartkomponente SAN, da hierdurch bei gleichem Hart-/Weichphasenanteil und gleichem Molgewicht der PB-Weichphase das mittlere Molgewicht deutlich verringert und damit die Verarbeitbarkeit verbessert wird. Das Material besteht dann aus einem PB-Kern und der ineinander gelösten graft-Schale und SAN-Matrix. Auch Varianten, in denen anstatt einer reinen PB-Hauptkette Nitrilkautschuk (Poly-(butadien-stat-acrylnitril)) oder SBR (Poly-(styrol-co-butadien)) eingesetzt wird, sind bekannt. Die (partielle) Verwendung von Methylstyrol statt Styrol erhöht die Temperaturbeständigkeit des Materials (höherer Glaspunkt der (M)SAN-Phase), ebenso die Copolymerisation von Styrol mit Maleinsäureanhydrid. Durchsichtige Varianten werden erhalten, wenn der Brechungsindex der Hartphase durch Copolymerisation mit Methylmethacrylat an den der PB-Weichphase angeglichen wird. Für bessere Umweltstabilität kann das UV- und Ozon-empfindliche PB insbesondere durch EPDM ersetzt werden.

Erfindungsgemäß ist außerdem eine Deckelanordnung für ein vorgenanntes Airbagklappensystem mit den vorgenannten Merkmalen der Deckelanordnung.

Weiter ist erfindungsgemäß eine Schusskanalanordnung für ein vorgenanntes Airbagklappensystem mit den vorgenannten Merkmalen der Schusskanalanordnung.

### Kurze Beschreibung der Zeichnungen

Nachfolgend wird die Erfindung unter Bezugnahme auf die anliegenden Zeichnungen anhand bevorzugter Ausführungsbeispiele näher erläutert.

In den Zeichnungen zeigen
- Fig. 1: eine schematische Ansicht eines Airbagklappensystems gemäß einer bevorzugten Ausführungsform der Erfindung;
- Fig. 2: eine schematische Ansicht einer Fahrzeugarmatur mit der Airbagklappensystems nach Figur 1;
- Fig. 3: eine Rückansicht einer Deckelanordnung des Airbagklappensystems nach Figur 1;
- Fig. 4: eine Rückansicht einer Schusskanalanordnung des Airbagklappensystems nach Figur 1;
- Fig. 5: eine Rückansicht der Deckelanordnung nach Figur 3, die mit der Schusskanalanordnung nach Figur 4 verbunden ist;
- Fig. 6a: eine Vorderansicht der Deckelanordnung nach Figur 3 mit dargestellten Randvertiefungen, wobei Schwenkvertiefungen der Randvertiefungen hervorgehoben dargestellt sind;
- Fig. 6b: eine Vorderansicht der Deckelanordnung nach Figur 3 mit dargestellten Randvertiefungen, wobei Öffnungsvertiefungen der Randvertiefungen hervorgehoben dargestellt sind;
- Fig. 7a: eine Detailansicht einer Schwenkvertiefung, mit eingebunden dargestelltem Schemaquerschnitt, nach Figur 6a;
- Fig. 7b: eine Detailansicht einer Öffnungsvertiefung, mit eingebunden dargestelltem Schemaquerschnitt, nach Figur 6b;
- Fig. 8: eine Detailansicht der Randvertiefungen der Rückansicht der Deckelanordnung nach Figur 3; und
- Fig. 9: eine Rückansicht der Deckelanordnung, mit hervorgehoben dargestellten Randvertiefungen, nach Figur 3.

### Detaillierte Beschreibung der Ausführungsbespiele

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

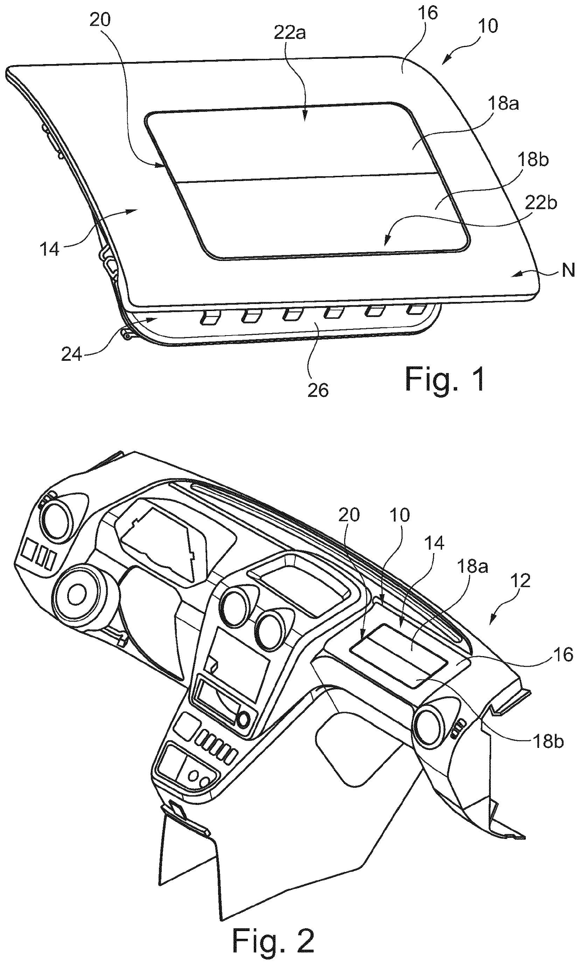

In den Figuren 1 bis 9 ist eine bevorzugte Ausführungsform eines Airbagklappensystems 10 dargestellt. Dieses ist ausgebildet zum bei Minustemperaturen fragmentfreien Auslösen eines Airbags einer Fahrzeugarmatur 12, aufweisend:
eine zu einem Fahrzeuginnenraum weisende Deckelanordnung 14, die ein Polymer aufweist, wobei die Deckelanordnung 14 einen Rahmenkörper 16 mit zwei Klappensegmenten 18a, 18b aufweist, die Randvertiefungen 20 aufweisen;
wobei die beiden Klappensegmente 18a, 18b derart stoßend zueinander angeordnet sind, dass ihre Randvertiefungen 20 zwei angrenzende Rechteckgrundstrukturen 22a, 22b erzeugen; und
eine mit der Deckelanordnung 14 verbundene Schusskanalanordnung 24, die ein Polymer aufweist, wobei die Schusskanalanordnung 24 einen Grundkörper 26 und zwei Klappenkörper 28a, 28b aufweist;
wobei der Grundkörper 26 den Rahmenkörper 16 deckend ausgebildet ist und wobei jeweils ein Klappenkörper 28a, 28b jeweils ein Klappensegment 18a, 18b deckend ausgebildet ist;
wobei die Randvertiefungen 20 der Rechteckgrundstrukturen 22a, 22b der Deckelanordnung 14 mindestens zwei unterschiedliche Materialstärken A1, A2 aufweisen.

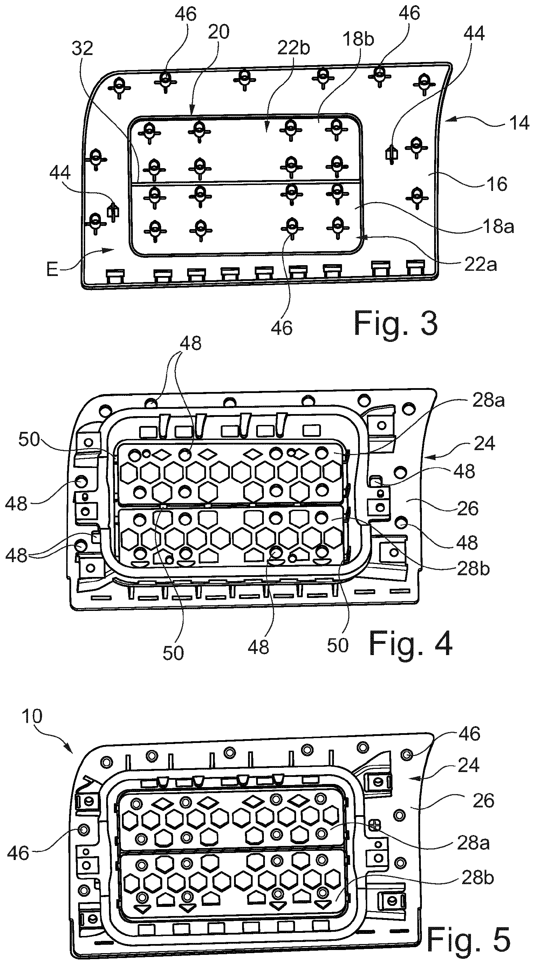

Figur 1 zeigt das Airbagklappensystem 10 in einer perspektivischen Ansicht. Dabei sind die Deckelanordnung 14 und die Schusskanalanordnung 24 zu dem Airbagklappensystem 10 zusammengefügt. Hauptsächlich dargestellt ist der im verbauten Zustand des Airbagklappensystems 10 für Fahrzeuginsassen sichtbare Bereich. Der im verbauten Zustand des Airbagklappensystems 10 für Fahrzeuginsassen nicht sichtbare Bereich ist insbesondere die Rückseite, die in Figur 5 dargestellt ist.

Analog zu der Ansicht der Rückseite des zusammengesetzten Airbagklappensystems 10, zeigt Figur 3 in der gleichen Perspektive zu Figur 5 eine Rückseite der Deckelanordnung 14 und Figur 4 eine Rückseite der Schusskanalanordnung 24.

Im in einer Fahrzeugarmatur verbauten Zustand ist das Airbagklappensystem 10 in Figur 2 beispielhaft dargestellt.

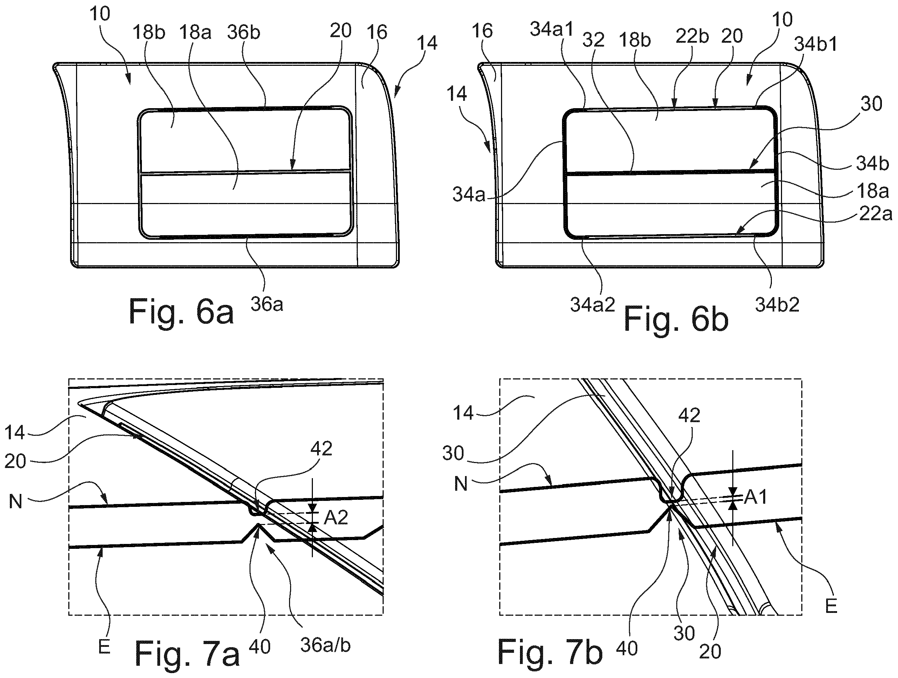

Insbesondere eine Gegenüberstellung der Figuren 7a und 7b zeigt, dass die zwei unterschiedlichen Materialstärken A1, A2 der Randvertiefungen 20 der angrenzenden Rechteckgrundstrukturen 22a, 22b aufgeteilt sind in eine erste Materialstärke A1 und in eine zweite Materialstärke A2;
wobei die Randvertiefungen 20 mit der ersten Materialstärke A1 als Öffnungsvertiefungen 30 mindestens eine H-Struktur bilden, die eine Quervertiefung 30 und zwei Parallelvertiefungen 34a, 34b aufweist;
und wobei die Randvertiefungen 20 mit der zweiten Materialstärke A2, die größer ist als die erste Materialstärke A1, als zwei Schwenkvertiefungen 36a, 36b ausgebildet sind, die sich jeweils von einem Ende 34a1, 34b1 einer ersten Parallelvertiefung 34a zu einem jeweils gegenüberliegenden Ende 34a2, 34b2 der zweiten Parallelvertiefung 34b erstecken.

Es wird darauf verwiesen, dass die beispielhaft dargestellte H-Struktur eine U-Struktur umfasst. Ebenso sind Merkmale einer Rechteckgrundstruktur 22a, 22b auch für zwei Rechteckgrundstrukturen 22a, 22b anwendbar. Eine gesonderte grafische Darstellung eines weiteren Ausführungsbeispiels mit einer alleinigen U-Struktur und/oder einer alleinigen Rechteckgrundstruktur 22a, 22b erfolgt nicht.

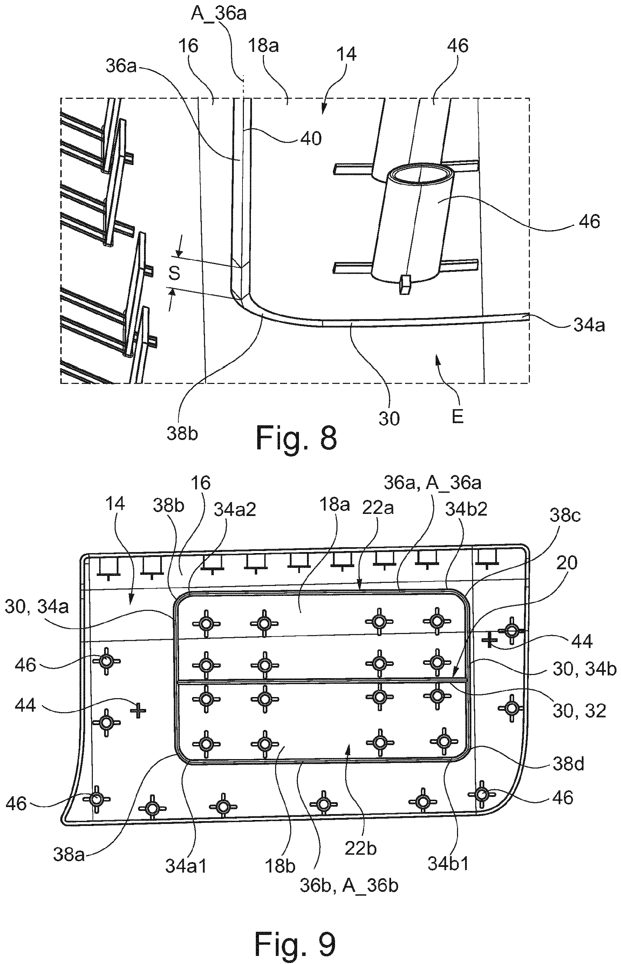

Wie in der Figur 8 vergrößert und beispielhaft für eine definierte Strecke S dargestellt, ist bevorzugt, dass die definierten Strecken S der Öffnungsvertiefungen 30 entlang einer jeweiligen Achse A_36a, A_36b der Schwenkvertiefungen 36a, 36b zwischen einschließlich zwei Millimeter bis einschließlich zehn Millimeter, vorzugsweise sieben Millimeter betragen.

Wie aus den Figuren 7a und 7b symbolisch erkennbar ist, ist bevorzugt, dass die zweite Materialstärke A2 um einen Faktor zwischen einschließlich zwei bis einschließlich vier, vorzugsweise um den Faktor drei, größer ist als die erste Materialstärke A1.

Die erste Materialstärke A1 beträgt gemäß der beispielhaften Darstellung nach Figur 7b 0,2 Millimeter. Insbesondere ist nach Figur 7a vorgesehen, dass die zweite Materialstärke A2 beispielsweise 0,6 Millimeter beträgt. Sofern ein Airbag nunmehr auslöst, wird dieser initial gegen die Seite des Airbagklappensystems 10 der von dem Fahrzeuginnenraum entfernten Fläche E der Deckelanordnung 14, und somit gegen die Schusskanalanordnung 24 gepresst. Der stetig aufbauende Druck führt zu einem Aufreißen der Randvertiefungen 20. Der Rahmenkörper 16, die beiden Klappensegmente 18a, 18b, der Grundkörper 26 und die beiden Klappenkörper 28a, 28b fragmentieren selbst nicht. Dies bedeutet, dass diese Komponenten sich zwar relativ zueinander bewegen können, um den auslösenden Airbag aus dem Airbagklappensystem 10 dringen zu lassen, allerdings zerbrechen die Komponenten nicht in scharfkantige Einzelteile, die einen mit dem Airbag zu schützenden Fahrzeuginsassen schützen sollten. Das Aufreißen der Randvertiefungen 20 erfolgt derart, dass zuerst die Öffnungsvertiefungen 30 aufreißen, wie bereits zuvor beschrieben. Der sich durch den Bereich der sich öffnenden Quervertiefung 32 drängende Airbag verdrängt die Klappensegmente 18a, 18b und die damit verbundenen Klappenkörper 28a, 28b. Diese schwenken um die Achse der ersten beziehungsweise zweiten Schwenkvertiefung A_36a, A_36b und ermöglichen dem Airbag vollständig den erforderlichen Austritt, um den Fahrzeuginsassen zu schützen.

Die Klappensegmente 18a, 18b und die damit verbundenen Klappenkörper 28a, 28b grenzen gemäß Figur 6b jeweils über drei Kanten vollständig an Öffnungsvertiefungen 30. Eine gemeinsame Öffnungsvertiefung 30 der Klappensegmente 18a, 18b bildet die Quervertiefung 32. Senkrecht zu der Quervertiefung 32 teilen sich die Klappensegmente 18a, 18b und die damit verbundenen Klappenkörper 28a, 28b eine erste und eine zweite Parallelvertiefung 34a, 34b. Das erste Ende der ersten Parallelvertiefung 34a1 ist gegenüberliegend vom ersten Ende der zweiten Parallelvertiefung 34b 1 angeordnet. Das zweite Ende der ersten Parallelvertiefung 34a2 ist gegenüberliegend vom zweiten Ende der zweiten Parallelvertiefung 34b2 angeordnet.

Eine gemeinsame Betrachtung der Figuren 6b, 8 und 9 offenbart, dass die Öffnungsvertiefungen 30 derart entlang Außenecken 38a, 38b, 38c, 38d der beiden angrenzenden Rechteckgrundstrukturen 22a, 22b angeordnet sind, dass sich die Öffnungsvertiefungen 30 zumindest teilweise über eine jeweils definierte Strecke S entlang einer jeweiligen Achse A_36a, A_36b der Schwenkvertiefungen 36a, 36b erstrecken. In Figur 9 ist gut erkennbar offenbart, dass die Außenecken 38a, 38b, 38c, 38d abgerundet sind. Dabei sind die Öffnungsvertiefungen 30 in der H-Struktur angeordnet und gehen nach dem Verlauf der Außenecken 38a, 38b, 38c, 38d und der jeweils definierten Strecke S in eine der Schwenkvertiefungen 36a, 36b über. Die Schwenkvertiefungen 36a, 36b sind insbesondere parallel zu der Quervertiefung 32 angeordnet, siehe Figur 6a.

Dabei sind die Schwenkvertiefungen 36a, 36b in der Figur 6a symbolisch durch dickere Linien hervorgehoben, wohingegen die Öffnungsvertiefungen 30 in der Figur 6b symbolisch durch dickere Linien hervorgehoben sind.

Grundsätzlich, jedoch in den Figuren nicht näher dargestellt, ist bevorzugt, dass sich mindestens ein Klappensegment 18a, 18b, vorzugsweise zwei Klappensegmente 18a, 18b, beim Auslösen des Airbags jeweils um eine Achse A_36a, A_36b einer jeweiligen Schwenkvertiefung 36a, 36b schwenkend von dem Rahmenkörper 16 löst beziehungsweise lösen.

Alternativ oder kombinierbar, jedoch in den Figuren nicht näher dargestellt, ist bevorzugt, dass sich mindestens ein Klappensegment 18a, 18b, vorzugsweise zwei Klappensegmente 18a, 18b, beim Auslösen des Airbags jeweils um eine Achse A_36a, A_36b einer jeweiligen Schwenkvertiefung 36a, 36b schwenkend am Rahmenkörper 16 bewegt beziehungsweise bewegen.

Optional kann auch vorgesehen sein, dass sich das erste Klappensegment 18a beim Auslösen des Airbags um seine Achse A_36a seiner Schwenkvertiefung 36a schwenkend am Rahmenkörper 16 verbleibend bewegt und dass sich das zweite Klappensegment 18b beim Auslösen des Airbags jeweils um seine Achse A_36a seiner Schwenkvertiefung 36b schwenkend von dem Rahmenkörper 16 löst. Dabei ist die Zuordnung des ersten beziehungsweise zweiten Klappensegment 18a, 18b nicht wesentlich.

In den Figuren 7a, 7b ist in den symbolisierten Querschnittdarstellungen und in Figur 8 ist dem Ausführungsbeispiel dargestellt, dass die Randvertiefungen 20 an einer von einem Fahrzeuginnenraum entfernten Fläche E der Deckelanordnung 14 eine mit einer Spitze 40 zum Fahrzeuginnenraum weisende Spitzenkontur, insbesondere eine Dreieckkontur, aufweisen. Dabei überlagern die symbolisierten Querschnittdarstellungen die Deckelanordnung 14 mit den jeweiligen Randvertiefungen 20.

In den Figuren 7a, 7b ist in den symbolisierten Querschnittdarstellungen dargestellt, dass die Randvertiefungen 20 an einer zu einem Fahrzeuginnenraum nahen Fläche N der Deckelanordnung 14 eine mit einer Wölbung 42 vom Fahrzeuginnenraum weg weisende Kontur, insbesondere eine U-Kontur, aufweisen.

Insbesondere ist Figur 5 ist erkennbar, dass die Deckelanordnung 14 und die Schusskanalanordnung 24 über Zentrierrippen 44 und/oder über Schweißdomen 46 miteinander verbunden sind, wobei sich die Zentrierrippen 44 und/oder Schweißdomen 46 insbesondere von einer von einem Fahrzeuginnenraum entfernten Fläche E der Deckelanordnung 14 in Richtung der Schusskanalanordnung 24 erstrecken, wobei die Schusskanalanordnung 24 Verbindungsöffnungen 48 zur Verbindung mit den Zentrierrippen 44 und/oder mit den Schweißdomen 46 aufweist.

Insbesondere in Figur 4 ist beispielhaft offenbart, dass die beiden Klappenkörper 28a, 28b über Verbindungssegmente 50 miteinander und/oder mit dem Grundkörper 26 verbunden sind, wobei die Verbindungssegmente 50 insbesondere voneinander beabstandet sind.

**Bezugszeichenliste**

| | |
|---|---|
| Airbagklappensystem | 10 |
| Fahrzeugarmatur | 12 |
| Deckelanordnung | 14 |
| Rahmenkörper | 16 |
| Erstes Klappensegment | 18a |
| Zweites Klappensegment | 18b |
| Randvertiefungen | 20 |
| Erste Rechteckgrundstruktur | 22a |
| Zweite Rechteckgrundstruktur | 22b |
| Schusskanalanordnung | 24 |
| Grundkörper | 26 |
| Erster Klappenkörper | 28a |
| Zweiter Klappenkörper | 28b |
| Öffnungsvertiefungen | 30 |
| Quervertiefung | 32 |
| Erste Parallelvertiefung | 34a |
| Erstes Ende der ersten Parallelvertiefung | 34a1 |
| Zweites Ende der ersten Parallelvertiefung | 34a2 |
| Zweite Parallelvertiefung | 34b |
| Erstes Ende der zweiten Parallelvertiefung | 34b 1 |
| Zweites Ende der zweiten Parallelvertiefung | 34b2 |
| Erste Schwenkvertiefung | 36a |
| Zweite Schwenkvertiefung | 36b |
| Außenecken | 38a, 38b, 38c, 38d |
| Spitze | 40 |
| Wölbung | 42 |
| Zentrierrippen | 44 |
| Schweißdomen | 46 |
| Verbindungsöffnungen | 48 |
| Verbindungssegmente | 50 |
| Erste Materialstärke | A1 |
| Zweite Materialstärke | A2 |
| Definierte Strecken | S |
| Achse der ersten Schwenkvertiefung | A_36a |
| Achse der zweiten Schwenkvertiefung | A_36b |
| Von einem Fahrzeuginnenraum entfernte Fläche der Deckelanordnung | E |
| Zu einem Fahrzeuginnenraum nahe Fläche der Deckelanordnung | N |

## Patentansprüche

1. Airbagklappensystem (10) zum bei Minustemperaturen fragmentfreien Auslösen eines Airbags einer Fahrzeugarmatur (12), aufweisend:
- eine zu einem Fahrzeuginnenraum weisende Deckelanordnung (14), die ein Polymer aufweist, wobei die Deckelanordnung (14) einen Rahmenkörper (16) mit mindestens einem Klappensegment (18a, 18b) aufweist, das Randvertiefungen (20) aufweist;
wobei die Randvertiefungen (20) mindestens eine Rechteckgrundstruktur (22a, 22b) erzeugen; und
- eine mit der Deckelanordnung (14) verbundene Schusskanalanordnung (24), die ein Polymer aufweist, wobei die Schusskanalanordnung (24) einen Grundkörper (26) und mindestens einen Klappenkörper (28a, 28b) aufweist;
wobei der Grundkörper (26) den Rahmenkörper (16) deckend ausgebildet ist und wobei der mindestens eine Klappenkörper (28a, 28b) das mindestens eine Klappensegment (18a, 18b) deckend ausgebildet ist;
wobei die Randvertiefungen (20) der Rechteckgrundstruktur (22a, 22b) der Deckelanordnung (14) mindestens zwei unterschiedliche Materialstärken (A1, A2) aufweisen, die zwei unterschiedlichen Materialstärken (A1, A2) der Randvertiefungen (20) der mindestens einen Rechteckgrundstruktur (22a, 22b) aufgeteilt sind in eine erste Materialstärke (A1) und in eine zweite Materialstärke (A2);
wobei die Randvertiefungen (20) mit der ersten Materialstärke (A1) als Öffnungsvertiefungen (30) mindestens eine U-Struktur bilden, die eine Quervertiefung (30) und zwei Parallelvertiefungen (34a, 34b) aufweist;
und wobei mindestens eine weitere Randvertiefung (20) mit der zweiten Materialstärke (A2), die größer ist als die erste Materialstärke (A1), als Schwenkvertiefung (36a, 36b) ausgebildet ist, die sich jeweils von einem Ende (34a1, 34b1) einer ersten Parallelvertiefung (34a) zu einem jeweils gegenüberliegenden Ende (34a2, 34b2) der zweiten Parallelvertiefung (34b) erstrecken
**dadurch gekennzeichnet dass** die Öffnungsvertiefungen (30) derart entlang Außenecken (38a, 38b, 38c, 38d) der einen oder beiden angrenzenden Rechteckgrundstrukturen (22a, 22b) angeordnet sind, dass sich die Öffnungsvertiefungen (30) zumindest teilweise über eine jeweils definierte Strecke (S) entlang einer jeweiligen Achse (A_36a, A_36b) der Schwenkvertiefungen (36a, 36b) erstrecken.

2. Airbagklappensystem (10) nach Anspruch 1, **dadurch gekennzeichnet, dass**
die Deckelanordnung (14) zwei Klappensegmente (18a, 18b) aufweist, die die Randvertiefungen (20) aufweisen; wobei die beiden Klappensegmente (18a, 18b) derart stoßend zueinander angeordnet sind, dass ihre Randvertiefungen (20) zwei angrenzende Rechteckgrundstrukturen (22a, 22b) erzeugen; und dass die Schusskanalanordnung (24) zwei Klappenkörper (28a, 28b) aufweist; wobei jeweils ein Klappenkörper (28a, 28b) jeweils ein Klappensegment (18a, 18b) deckend ausgebildet ist;
wobei die Randvertiefungen (20) der Rechteckgrundstrukturen (22a, 22b) der Deckelanordnung (14) mindestens zwei unterschiedliche Materialstärken (A1, A2) aufweisen.

3. Airbagklappensystem (10) nach Anspruch 2 , **dadurch gekennzeichnet, dass** die
zwei unterschiedlichen Materialstärken (A1, A2) der Randvertiefungen (20) der angrenzenden Rechteckgrundstrukturen (22a, 22b) aufgeteilt sind in eine erste Materialstärke (A1) und in eine zweite Materialstärke (A2);
wobei die Randvertiefungen (20) mit der ersten Materialstärke (A1) als Öffnungsvertiefungen (30) mindestens eine H-Struktur bilden, die eine Quervertiefung (30) und zwei Parallelvertiefungen (34a, 34b) aufweist;
und wobei die Randvertiefungen (20) mit der zweiten Materialstärke (A2), die größer ist als die erste Materialstärke (A1), als zwei Schwenkvertiefungen (36a, 36b) ausgebildet sind, die sich jeweils von einem Ende (34a1, 34b1) einer ersten Parallelvertiefung (34a) zu einem jeweils gegenüberliegenden Ende (34a2, 34b2) der zweiten Parallelvertiefung (34b) erstecken.

4. Airbagklappensystem (10) nach Anspruch 3 , **dadurch gekennzeichnet, dass** die
definierten Strecken (S) der Öffnungsvertiefungen (30) entlang einer jeweiligen Achse (A_36a, A_36b) der Schwenkvertiefungen (36a, 36b) zwischen einschließlich zwei Millimeter bis einschließlich zehn Millimeter, vorzugsweise sieben Millimeter betragen.

5. Airbagklappensystem (10) nach Anspruch 4, **dadurch gekennzeichnet, dass**
die Außenecken (38a, 38b, 38c, 38d) abgerundet sind.

6. Airbagklappensystem (10) nach mindestens einem der vorgenannten Ansprüche, **dadurch gekennzeichnet, dass** die zweite Materialstärke (A2) um einen Faktor zwischen einschließlich zwei bis einschließlich vier, vorzugsweise um den Faktor drei, größer ist als die erste Materialstärke (A1).

7. Airbagklappensystem (10) nach mindestens einem der vorgenannten Ansprüche, **dadurch gekennzeichnet, dass** sich mindestens ein Klappensegment (18a, 18b), vorzugsweise zwei Klappensegmente (18a, 18b), beim Auslösen des Airbags jeweils um eine Achse (A_36a, A_36b) einer jeweiligen Schwenkvertiefung (36a, 36b) schwenkend von dem Rahmenkörper (16) löst beziehungsweise lösen.

8. Airbagklappensystem (10) nach mindestens einem der vorgenannten Ansprüche, **dadurch gekennzeichnet, dass** sich mindestens ein Klappensegment (18a, 18b), vorzugsweise zwei Klappensegmente (18a, 18b), beim Auslösen des Airbags jeweils um eine Achse (A_36a, A_36b) einer jeweiligen Schwenkvertiefung (36a, 36b) schwenkend am Rahmenkörper (16) bewegt beziehungsweise bewegen.

9. Airbagklappensystem (10) nach mindestens einem der vorgenannten Ansprüche, **dadurch gekennzeichnet, dass** die Randvertiefungen (20) an einer von einem Fahrzeuginnenraum entfernten Fläche (E) der Deckelanordnung (14) eine mit einer Spitze (40) zum Fahrzeuginnenraum weisende Spitzenkontur, insbesondere eine Dreieckkontur, aufweisen.

10. Airbagklappensystem (10) nach mindestens einem der vorgenannten Ansprüche, **dadurch gekennzeichnet, dass** die Randvertiefungen (20) an einer zu einem Fahrzeuginnenraum nahen Fläche (N) der Deckelanordnung (14) eine mit einer Wölbung (42) vom Fahrzeuginnenraum weg weisende Kontur, insbesondere eine U-Kontur, aufweisen.

11. Airbagklappensystem (10) nach mindestens einem der vorgenannten Ansprüche, **dadurch gekennzeichnet, dass** die Deckelanordnung (14) und die Schusskanalanordnung (24) über Zentrierrippen (44) und/oder über Schweißdomen (46) miteinander verbunden sind, wobei sich die Zentrierrippen (44) und/oder Schweißdomen (46) insbesondere von einer von einem Fahrzeuginnenraum entfernten Fläche (E) der Deckelanordnung (14) in Richtung der Schusskanalanordnung (24) erstrecken, wobei die Schusskanalanordnung (24) Verbindungsöffnungen (48) zur Verbindung mit den Zentrierrippen (44) und/oder mit den Schweißdomen (46) aufweist.

12. Airbagklappensystem (10) nach mindestens einem der vorgenannten Ansprüche, **dadurch gekennzeichnet, dass** die beiden Klappenkörper (28a, 28b) über Verbindungssegmente (50) miteinander und/oder mit dem Grundkörper (26) verbunden sind, wobei die Verbindungssegmente (50) insbesondere voneinander beabstandet sind.

13. Deckelanordnung (14) für ein Airbagklappensystem (10) nach mindestens einem der vorgenannten Ansprüche, **gekennzeichnet durch** die Merkmale der Deckelanordnung (14) nach mindestens einem der vorgenannten Ansprüche.

14. Schusskanalanordnung (24) für ein Airbagklappensystem (10) nach mindestens einem der vorgenannten Ansprüche, **gekennzeichnet durch** die Merkmale der Schusskanalanordnung (24) nach mindestens einem der vorgenannten Ansprüche.

## Claims

1. Airbag flap system (10) for triggering an airbag of a vehicle dashboard (12) in a fragment-free manner at sub-zero temperatures, having:
- a lid assembly (14) which points towards a vehicle interior and which comprises a polymer, wherein the lid assembly (14) has a frame body (16) having at least one flap segment (18a, 18b) which has peripheral depressions (20) ;
wherein the peripheral depressions (20) generate at least one rectangular basic structure (22a, 22b); and
- a deployment chute assembly (24) which is connected to the lid assembly (14) and which comprises a polymer, wherein the deployment chute assembly (24) has a main body (26) and at least one flap body (28a, 28b); wherein the main body (26) is configured so as to cover the frame body (16) and wherein the at least one flap body (28a, 28b) is configured so as to cover the at least one flap segment (18a, 18b);
wherein the peripheral depressions (20) of the rectangular basic structure (22a, 22b) of the lid assembly (14) have at least two different material thicknesses (A1, A2), the two different material thicknesses (A1, A2) of the peripheral depressions (20) of the at least one rectangular basic structure (22a, 22b) being divided into a first material thickness (A1) and into a second material thickness (A2);
wherein the peripheral depressions (20) having the first material thickness (A1) as opening depressions (30) form at least one U-structure which has one transverse depression (30) and two parallel depressions (34a, 34b); and wherein at least one further peripheral depression (20) having the second material thickness (A2) which is greater than the first material thickness (A1) is configured as a pivot depression (36a, 36b) which extends in each case from one end (34a1, 34b1) of a first parallel depression (34a) to a respective opposite end (34a2, 34b2) of the second parallel depression (34b),
**characterized in that**
the opening depressions (30) are disposed along external corners (38a, 38b, 38c, 38d) of the one or both adjacent rectangular basic structure/structures (22a, 22b) in such a manner that the opening depressions (30) extend at least partially across a respective defined distance (S) along a respective axis (A_36a, A_36b) of the pivot depressions (36a, 36b).

2. Airbag flap system (10) according to Claim 1, **characterized in that** the lid assembly (14) has two flap segments (18a, 18b) which have the peripheral depressions (20); wherein the two flap segments (18a, 18b) are disposed so as to mutually abut in such a manner that the peripheral depressions (20) thereof generate two adjacent rectangular basic structures (22a, 22b); and **in that** the deployment chute assembly (24) has two flap bodies (28a, 28b); wherein one flap body (28a, 28b) is in each case configured so as to cover in each case one flap segment (18a, 18b);
wherein the peripheral depressions (20) of the rectangular basic structures (22a, 22b) of the lid assembly (14) have at least two different material thicknesses (A1, A2).

3. Airbag flap system (10) according to Claim 2, **characterized in that** the two different material thicknesses (A1, A2) of the peripheral depressions (20) of the adjacent rectangular basic structures (22a, 22b) are divided into a first material thickness (A1) and into a second material thickness (A2);
wherein the peripheral depressions (20) having the first material thickness (A1) as opening depressions (30) form at least one H-structure which has one transverse depression (30) and two parallel depressions (34a, 34b); and wherein the peripheral depressions (20) having the second material thickness (A2) which is greater than the first material thickness (A1) are configured as two pivot depressions (36a, 36b) which extend in each case from one end (34a1, 34b1) of a first parallel depression (34a) to a respective opposite end (34a2, 34b2) of the second parallel depression (34b).

4. Airbag flap system (10) according to Claim 3, **characterized in that** the defined distances (S) of the opening depressions (30) along a respective axis (A-36a, A_36b) of the pivot depressions (36a, 36b) are between two millimetres inclusive and ten millimetres inclusive, preferably seven millimetres.

5. Airbag flap system (10) according to Claim 4, **characterized in that** the external corners (38a, 38b, 38c, 38d) are radiused.

6. Airbag flap system (10) according to at least one of the preceding claims, **characterized in that** the second material thickness (A2) is greater than the first material thickness (A1) by a factor between two inclusive and four inclusive, preferably by the factor of three.

7. Airbag flap system (10) according to at least one of the preceding claims, **characterized in that** at least one flap segment (18a, 18b), preferably two flap segments (18a, 18b), when triggering the airbag is/are released from the frame body (16) so as to pivot in each case about an axis (A_36a, A_36b) of a respective pivot depression (36a, 36b).

8. Airbag flap system (10) according to at least one of the preceding claims, **characterized in that** at least one flap segment (18a, 18b), preferably two flap segments (18a, 18b), when triggering the airbag moves/move on the frame body (16) so as to pivot in each case about an axis (A_36a, A_36b) of a respective pivot depression (36a, 36b) .

9. Airbag flap system (10) according to at least one of the preceding claims, **characterized in that** the peripheral depressions (20) on a face (E) of the lid assembly (14) that is distal from a vehicle interior have a tipped contour, in particular a triangular contour, which by way of a tip (40) points towards the vehicle interior.

10. Airbag flap system (10) according to at least one of the preceding claims, **characterized in that** the peripheral depressions (20) on a face (N) of the lid assembly (14) that is proximal to a vehicle interior have a contour, in particular a U-contour, which by way of a convexity (42) points away from the vehicle interior.

11. Airbag flap system (10) according to at least one of the preceding claims, **characterized in that** the lid assembly (14) and the deployment chute assembly (24) are connected to one another by way of centring ribs (44) and/or by way of welding towers (46), wherein the centring ribs (44) and/or welding towers (46) from a face (E) of the lid assembly (14) that is distal from a vehicle interior extend in particular in the direction of the deployment chute assembly (24), wherein the deployment chute assembly (24) has connection openings (48) for connecting to the centring ribs (44) and/or to the welding towers (46).

12. Airbag flap system (10) according to at least one of the preceding claims, **characterized in that** the two flap bodies (28a, 28b) are connected to one another and/or to the main body (26) by way of connection segments (50), wherein the connection segments (50) are in particular mutually spaced apart.

13. Lid assembly (14) for an airbag flap system (10) according to at least one of the preceding claims, **characterized by** the features of the lid assembly (14) according to at least one of the preceding claims.

14. Deployment chute assembly (24) for an airbag flap system (10) according to at least one of the preceding claims, **characterized by** the features of the deployment chute assembly (24) according to at least one of the preceding claims.

## Revendications

1. Système de volet de coussin gonflable (10) pour le déploiement sans fragment d'un coussin gonflable d'un tableau de bord de véhicule (12) à des températures négatives, comprenant :
- un agencement de couvercle (14) orienté vers l'espace intérieur de véhicule, qui comprend un polymère, l'agencement de couvercle (14) comprenant un corps de cadre (16) muni d'au moins un segment de volet (18a, 18b), qui comprend des évidements de bord (20) ; les évidements de bord (20) produisant au moins une structure de base rectangulaire (22a, 22b) ; et
- un agencement de canal d'éjection (24) relié à l'agencement de couvercle (14), qui comprend un polymère, l'agencement de canal d'éjection (24) comprenant un corps de base (26) et au moins un corps de volet (28a, 28b) ;
le corps de base (26) étant configuré pour recouvrir le corps de cadre (16) et l'au moins un corps de volet (28a, 28b) étant configuré pour recouvrir l'au moins un segment de volet (18a, 18b) ;
les évidements de bord (20) de la structure de base rectangulaire (22a, 22b) de l'agencement de couvercle (14) présentant au moins deux épaisseurs de matériau différentes (A1, A2), les deux épaisseurs de matériau différentes (A1, A2) des évidements de bord (20) de l'au moins une structure de base rectangulaire (22a, 22b) étant réparties en une première épaisseur de matériau (A1) et en une deuxième épaisseur de matériau (A2) ;
les évidements de bord (20) ayant la première épaisseur de matériau (A1) formant en tant que évidement d'ouverture (30) au moins une structure en U, qui comprend un évidement transversal (30) et deux évidements parallèles (34a, 34b) ;
et au moins un autre évidement de bord (20) ayant la deuxième épaisseur de matériau (A2), qui est supérieure à la première épaisseur de matériau (A1), étant configuré en tant qu'évidement de pivotement (36a, 36b), qui s'étend à chaque fois à partir d'une extrémité (34a1, 34b1) d'un premier évidement parallèle (34a) jusqu'à une extrémité respectivement opposée (34a2, 34b2) du deuxième évidement parallèle (34b), **caractérisé en ce que**
les évidements d'ouverture (30) sont agencés le long de coins extérieurs (38a, 38b, 38c, 38d) d'une ou des deux structures de base rectangulaires adjacentes (22a, 22b) de telle sorte que les évidements d'ouverture (30) s'étendent au moins partiellement sur une distance respectivement définie (S) le long d'un axe respectif (A_36a, A_36b) des évidements de pivotement (36a, 36b).

2. Système de volet de coussin gonflable (10) selon la revendication 1, **caractérisé en ce que** l'agencement de couvercle (14) comprend deux segments de volet (18a, 18b), qui comprennent les évidements de bord (20), les deux segments de volet (18a, 18b) étant agencés l'un contre l'autre de telle sorte que leurs évidements de bord (20) produisent deux structures de base rectangulaires adjacentes (22a, 22b) ; et **en ce que** l'agencement de canal d'éjection (24) comprend deux corps de volet (28a, 28b) ; un corps de volet (28a, 28b) étant à chaque fois configuré pour recouvrir un segment de volet (18a, 18b) ;
les évidements de bord (20) des structures de base rectangulaires (22a, 22b) de l'agencement de couvercle (14) présentant au moins deux épaisseurs de matériau différentes (A1, A2).

3. Système de volet de coussin gonflable (10) selon la revendication 2, **caractérisé en ce que** les deux épaisseurs de matériau différentes (A1, A2) des évidements de bord (20) des structures de base rectangulaires adjacentes (22a, 22b) sont réparties en une première épaisseur de matériau (A1) et en une deuxième épaisseur de matériau (A2) ;
les évidements de bord (20) ayant la première épaisseur de matériau (A1) formant en tant que évidements d'ouverture (30) au moins une structure en H, qui comprend un évidement transversal (30) et deux évidements parallèles (34a, 34b) ;
et les évidements de bord (20) ayant la deuxième épaisseur de matériau (A2), qui est supérieure à la première épaisseur de matériau (A1), étant configurés sous la forme de deux évidements de pivotement (36a, 36b), qui s'étendent à chaque fois à partir d'une extrémité (34a1, 34b1) d'un premier évidement parallèle (34a) jusqu'à une extrémité respectivement opposée (34a2, 34b2) du deuxième évidement parallèle (34b).

4. Système de volet de coussin gonflable (10) selon la revendication 3, **caractérisé en ce que** les distances définies (S) des évidements d'ouverture (30) le long d'un axe respectif (A_36a, A_36b) des évidements de pivotement (36a, 36b) sont comprises entre deux millimètres inclus et dix millimètres inclus, de préférence sept millimètres.

5. Système de volet de coussin gonflable (10) selon la revendication 4, **caractérisé en ce que** les coins extérieurs (38a, 38b, 38c, 38d) sont arrondis.

6. Système de volet de coussin gonflable (10) selon au moins l'une quelconque des revendications précédentes, **caractérisé en ce que** la deuxième épaisseur de matériau (A2) est supérieure à la première épaisseur de matériau (A1) d'un facteur compris entre deux inclus et quatre inclus, de préférence d'un facteur de trois.

7. Système de volet de coussin gonflable (10) selon au moins l'une quelconque des revendications précédentes, **caractérisé en ce qu'**au moins un segment de volet (18a, 18b), de préférence deux segments de volet (18a, 18b), se détache ou se détachent du corps de cadre (16) en pivotant respectivement autour d'un axe (A_36a, A_36b) d'un évidement de pivotement respectif (36a, 36b) lors du déploiement du coussin gonflable.

8. Système de volet de coussin gonflable (10) selon au moins l'une quelconque des revendications précédentes, **caractérisé en ce qu'**au moins un segment de volet (18a, 18b), de préférence deux segments de volet (18a, 18b) se déplace ou se déplacent sur le corps de cadre (16) en pivotant respectivement autour d'un axe (A_36a, A_36b) d'un évidement de pivotement respectif (36a, 36b) lors du déploiement du coussin gonflable.

9. Système de volet de coussin gonflable (10) selon au moins l'une quelconque des revendications précédentes, **caractérisé en ce que** les évidements de bord (20) présentent, sur une surface (E) de l'agencement de couvercle (14) éloignée d'un espace intérieur de véhicule, un contour en pointe orienté vers l'espace intérieur de véhicule avec une pointe (40), notamment un contour triangulaire.

10. Système de volet de coussin gonflable (10) selon au moins l'une quelconque des revendications précédentes, **caractérisé en ce que** les évidements de bord (20) présentent, sur une surface (N) de l'agencement de couvercle (14) proche de l'espace intérieur de véhicule, un contour détourné de l'espace intérieur de véhicule avec une convexité (42), notamment un contour en U.

11. Système de volet de coussin gonflable (10) selon au moins l'une quelconque des revendications précédentes, **caractérisé en ce que** l'agencement de couvercle (14) et l'agencement de canal d'éjection (24) sont reliés l'un à l'autre par l'intermédiaire de nervures de centrage (44) et/ou par l'intermédiaire de dômes de soudage (46), les nervures de centrage (44) et/ou les dômes de soudage (46) s'étendant notamment à partir d'une surface (E) de l'agencement de couvercle (14) éloignée d'un espace intérieur de véhicule en direction de l'agencement de canal d'éjection (24), l'agencement de canal d'éjection (24) comprenant des ouvertures de liaison (48) pour la liaison aux nervures de centrage (44) et/ou aux dômes de soudage (46).

12. Système de volet de coussin gonflable (10) selon au moins l'une quelconque des revendications précédentes, **caractérisé en ce que** les deux corps de volet (28a, 28b) sont reliés l'un à l'autre et/ou au corps de base (26) par l'intermédiaire de segments de liaison (50), les segments de liaison (50) étant notamment espacés les uns des autres.

13. Agencement de couvercle (14) pour un système de volet de coussin gonflable (10) selon au moins l'une quelconque des revendications précédentes, **caractérisé par** les caractéristiques de l'agencement de couvercle (14) selon au moins l'une quelconque des revendications précédentes.

14. Agencement de canal d'éjection (24) pour un système de volet de coussin gonflable (10) selon au moins l'une quelconque des revendications précédentes, **caractérisé par** les caractéristiques de l'agencement de canal d'éjection (24) selon au moins l'une quelconque des revendications précédentes.
